# EUROPÄISCHE PATENTSCHRIFT

(11) **EP 2 753 452 B1**
(45) Veröffentlichungstag und Bekanntmachung des Hinweises auf die Patenterteilung: **05.10.2016**
(21) Anmeldenummer: 12744008.9
(22) Anmeldetag: 10.08.2012
(51) Int. Cl.: B23Q 3/157

(54) **WERKZEUGMASCHINE MIT MASCHINENMAGAZIN UND HINTERGRUNDMAGAZIN**
MACHINE TOOL HAVING A MACHINE MAGAZINE AND A BACKGROUND MAGAZINE
MACHINE-OUTIL DOTEE D'UN MAGASIN DE MACHINE ET D'UN MAGASIN D'ARRIÈRE-PLAN

(30) Priorität: 09.09.2011 DE 102011113311
(43) Veröffentlichungstag der Anmeldung: 16.07.2014
(60) Teilanmeldung: 16185179.5
(73) Patentinhaber: Chiron-Werke GmbH & Co. KG, 78532 Tuttlingen (DE)
(72) Erfinder: PRUST, Dirk, 78532 Tuttlingen (DE); EPPLER, Claus, 72469 Meßkirch (DE)
(74) Vertreter: Witte, Weller & Partner Patentanwälte mbB
(86) Internationale Anmeldenummer: PCT/EP2012/065666
(87) Internationale Veröffentlichungsnummer: WO 2013/034388

(56) Entgegenhaltungen:
- WO-A2-2006/050551
- DE-A1- 10 163 294
- DE-A1- 19 851 264
- JP-A- 54 099 280

## Beschreibung

Die vorliegende Erfindung betrifft eine Werkzeugmaschine mit zumindest einer gegenüber einer Vorrichtung zum Halten von Werkstücken relativ in zumindest einer von drei Raumrichtungen verfahrbaren Werkzeugspindel, in die Werkzeuge zur Bearbeitung der Werkstücke einspannbar sind, mit einem Maschinenmagazin, in dem zum Einwechseln in die zumindest eine Werkzeugspindel vorgesehene Werkzeuge vorrätig gehalten werden, und mit einem Hintergrundmagazin, in dem zum Einwechseln in das Maschinenmagazin vorgesehene Werkzeuge vorrätig gehalten werden, wobei in dem Maschinenmagazin für die oder jede Werkzeugspindel vier Speicherplätze zur Aufnahme von Werkzeugen vorgesehen sind.

Die Erfindung betrifft ferner ein Verfahren zum Werkzeugwechsel an einer Werkzeugmaschine mit zumindest einer gegenüber einer Vorrichtung zum Halten von Werkstücken relativ in zumindest einer von drei Raumrichtungen verfahrbaren Werkzeugspindel, in die Werkstücke zur Bearbeitung der Werkstücke einspannbar sind, einem Maschinenmagazin, in dem zum Einwechseln in die zumindest eine Werkzeugspindel vorgesehene Werkzeuge vorrätig gehalten werden, und einem Hintergrundmagazin, in dem zum Einwechseln in das Maschinenmagazin vorgesehene Werkzeuge vorrätig gehalten werden, bei dem die zumindest eine Werkzeugspindel in eine Werkzeugwechselposition gefahren wird, an der Werkzeuge zwischen dem Maschinenmagazin und der zumindest einen Werkzeugspindel gewechselt werden, und eine Werkzeugtauschposition vorgesehen ist, an der Werkzeuge zwischen dem Hintergrundmagazin und dem Maschinenmagazin gewechselt werden, wobei sich in dem Maschinenmagazin für die oder jede Werkzeugspindel maximal vier Werkzeuge zur selben Zeit befinden.

Eine derartige Werkzeugmaschine sowie ein Verfahren der vorstehend genannten Art sind aus der DE 101 63 294 A1 und der WO 2006/050551 A2 bekannt.

Im Rahmen der vorliegenden Erfindung wird unter einer "in zumindest in einer von drei Raumrichtungen relativ zu einer Vorrichtung zum Halten von Werkstücken verfahrbaren Werkzeugspindel" eine Anordnung verstanden, bei der die Werkzeugspindel und das Werkstück relativ zueinander zumindest in einer der drei orthogonalen Raumachsen x, y und z verfahrbar sind. Wenn es sich bei der Werkzeugmaschine um eine so genannte Fahrständermaschine handelt, dann sind alle drei Bewegungsrichtungen in der Werkzeugspindel realisiert, diese wird also in x-, y- und z-Richtung auf das Werkstück zugestellt.

Dabei ist es jedoch auch möglich, eine oder zwei Bewegungsrichtungen, also insbesondere die x- und y-Richtung, in dem Werkstück zu realisieren.

Für die Realisierung der vorliegenden Erfindung ist es jedoch unerheblich, wie die Bewegungsachsen auf die Werkzeugspindel und das Werkstück verteilt werden.

Sofern alle drei Bewegungsrichtungen in der Werkzeugspindel realisiert sind, ist die Werkzeugmaschine vorzugsweise eine Fahrständermaschine mit vertikalachsiger Werkzeugspindel, die Werkzeugspindel wird also in vertikaler Richtung auf das Werkstück zugestellt. Es ist jedoch auch möglich, die Werkzeugspindel horizontal auszurichten, so dass die Zustellung horizontal erfolgt.

Ferner ist es möglich, entweder in der Werkzeugspindel und/oder in dem Werkstück weitere Schwenk- und Drehachsen anzuordnen.

Die Werkzeugmaschine kann dabei mit einer, 2 4 oder noch mehr Werkzeugspindeln ausgestattet sein, ohne den Rahmen und die Vorteile sowie Wirkungsweisen der vorliegenden Erfindung zu verlassen. Die mehreren Werkzeugspindeln werden vorzugsweise synchron zueinander verfahren, sie sind bevorzugt starr miteinander gekoppelt und dienen dann der zeit- und konturgleichen Bearbeitung von so vielen Werkstücken, wie werkzeugspindeln vorhanden sind..

Die vorliegende Erfindung geht aus von einer Werkzeugmaschine, in der sowohl ein Maschinenmagazin als auch ein Hintergrundmagazin vorgesehen sind.

Werkzeugmaschinen mit Werkzeugmagazinen sind aus dem Stand der Technik vielfach bekannt. Das Werkzeugmagazin ist dabei in der Regel an der Werkzeugmaschine angebracht und kann beispielsweise als Kettenmagazin oder als Tellermagazin ausgebildet sein.

In derartigen Werkzeugmagazinen werden unterschiedliche Werkzeuge bereitgehalten, die nacheinander in die Werkzeugspindel eingesetzt werden, um bestimmte Bearbeitungsvorgänge an einem Werkstück vorzunehmen. Der Werkzeugwechsel zwischen dem Werkzeugmagazin und der Werkzeugspindel, erfolgt dabei auf verschiedene Art und Weisen.

Aus der DE 197 24 635 A1 ist beispielsweise eine Werkzeugmaschine mit einem Hintergrundmagazin in Form eines Tellermagazins bekannt, bei der ein Doppelgreifer vorgesehen ist, der Werkzeuge zwischen dem Tellermagazin und dem Arbeitsraum der Werkzeugmaschine hin- und hertransportiert. Der Doppelgreifer entnimmt dabei ein Werkzeug aus dem Tellermagazin und wird mit diesem Werkzeug dann in den Arbeitsraum geschwenkt. Dort fährt die Werkzeugspindel im Pick-up-Verfahren den Doppelgreifer an, legt das aktuell in die Werkzeugspindel eingespannte Werkzeug in dem freien Greifer des Doppelgreifers ab, und ergreift dann das zuvor aus dem Tellermagazin in den Doppelgreifer eingelegte Werkzeug.

Zusätzlich zu dem Tellermagazin weist die bekannte Werkzeugmaschine noch ein an der Werkzeugmaschine angeordnetes Maschinenmagazin auf, aus dem ebenfalls Werkzeuge in die Werkzeugspindel gewechselt werden können. Das mittels des Doppelgreifers aus dem Tellermagazin in die Werkzeugspindel eingewechselte Werkzeug kann auf diese Weise mit Hilfe der Werkzeugspindel auch in dem Maschinenmagazin abgelegt werden.

Aus der DE 199 19 446 A1 ist eine weitere Werkzeugmaschine bekannt, bei der das Maschinenmagazin als Kettenmagazin ausgebildet ist. Zum Werkzeugwechsel wird das Kettenmagazin in den Arbeitsraum der Werkzeugmaschine geschwenkt, wo ein Werkzeugwechsel zu der Werkzeugspindel im Pick-up-Verfahren stattfindet.

Bei den insoweit beschriebenen Werkzeugmaschinen kann in dem jeweiligen Maschinenmagazin nur eine bestimmte Anzahl von Werkzeugen zwischengelagert werden, so dass es häufig erforderlich ist, das Werkstück auf eine andere Werkzeugmaschine umzuspannen, um hier Bearbeitungsvorgänge mit weiteren Werkzeugen durchführen zu können.

Die DE 197 24 635 A1 beschreibt in diesem Zusammenhang eine Werkzeugmaschine, bei der ein externes Werkzeugmagazin als Hintergrundmagazin vorgesehen ist, durch das weitere Werkzeuge bereitgestellt werden.

Eine ähnliche Konstruktion zeigt auch die DE 100 20 801 A1. Das Hintergrundmagazin ist als Regalmagazin ausgelegt, in dem eine sehr große Anzahl von Werkzeugen zwischengespeichert werden kann. An dem Regalmagazin ist eine Übergabevorrichtung vorgesehen, die Werkzeuge aus dem Regalmagazin entnimmt und zu einer gegenüber dem Regalmagazin ortsfesten Übergabeposition transportiert.

Diese Übergabeposition wird auch von einem schwenkbar am Maschinengestell gelagerten Doppelgreifer bedient, der in der Übergabeposition ein Werkzeug an die Übergabevorrichtung abgeben bzw. ein neues Werkzeug von der Übergabevorrichtung entnehmen kann. Mit diesem neuen Werkzeug schwenkt der Doppelgreifer dann in die Nähe des Arbeitsraumes der Werkzeugmaschine, wo er das neue Werkzeug für einen Werkzeugwechsel im Pick-up-Verfahren bereitstellt.

Wenn die Werkzeugspindel einen Bearbeitungsvorgang beendet hat, fährt sie zu der Spindelposition des Doppelgreifers und legt zunächst das bisher verwendete Werkzeug in dem freien Greifer ab. Danach ergreift die Werkzeugspindel das neu aus dem Regalmagazin herangebrachte Werkzeug und fährt wieder in den Arbeitsraum, wo mit dem neuen Werkzeug die Bearbeitung des Werkstückes fortgesetzt wird.

Die Zahl der bei dieser Konstruktion zur Verfügung stehenden Werkzeuge ist theoretisch beliebig groß, so dass durch das Hintergrundmagazin zusammen mit der Übergabevorrichtung und dem Doppelgreifer die bei Maschinenmagazinen aus Platzgründen vorhandene Problematik der limitiert zur Verfügung stehenden Werkzeuge beseitigt ist.

Die bekannte Konstruktion ist jedoch konstruktiv aufwändig, wobei der Werkzeugwechsel für viele Anwendungsfälle nicht schnell genug ist.

Davon ausgehend beschreibt die DE 102 25 143 A1 eine Werkzeugmaschine, die das Prinzip des Maschinenmagazins mit der zwar begrenzten Anzahl von gespeicherten Werkzeugen, dafür aber der schnellen Möglichkeit des Werkzeugwechsels kombiniert mit den Vorteilen des Hintergrundmagazins, bei der die Speichermöglichkeit für eine beliebig große Anzahl von Werkzeugen ausgenutzt werden kann.

Die bekannte Werkzeugmaschine ermöglicht damit zum einen den schnellen Werkzeugwechsel mit Hilfe des Maschinenmagazins, wobei aus dem Hintergrundmagazin Werkzeuge aus dem Maschinenmagazin entnommen und neue Werkzeuge in das Maschinenmagazin eingebracht werden können, so dass das Maschinenmagazin sozusagen virtuell auf die Größe des Hintergrundmagazins ausgedehnt wurde.

Bei der bekannten Werkzeugmaschine ist das Maschinenmagazin als Kettenmagazin ausgebildet, das mitfahrend an dem y-Schlitten der als Fahrständermaschine ausgebildeten Werkzeugmaschine angeordnet ist. Dieses Kettenmagazin wird zum Werkzeugwechsel in den Arbeitsraum der Werkzeugmaschine gefahren, wobei es zum Werkzeugaustausch mit dem Hintergrundmagazin in eine Übergabeposition bewegt werden muss.

Obwohl diese Werkzeugmaschine wegen der prinzipiell unbegrenzten Anzahl von Werkzeugen und des schnellen Werkzeugwechsels vielen Anforderungen genügt, ist sie für besonders schnelle Werkzeugwechselzeiten und insbesondere für besonders schnelle Span-zu-Span-Zeiten in vielen Anwendungsfällen doch nicht geeignet.

Die eingangs erwähnte DE 101 63 294 A1 beschreibt eine Werkzeugmaschine, bei der ein Hintergrundmagazin vorgesehen ist, das eine Werkzeugspindel mit Werkzeugen versorgt. Die Übergabe erfolgt über einen als Zwischenspeicher bezeichneten Vierfachgreifer, in dem insgesamt vier Speicherplätze vorgesehen sind. Der Vierfachgreifer dient dazu, den Werkzeugwechsel dadurch zu beschleunigen, dass während der Bearbeitung eines Werkstückes bereits bis zu drei neue Werkzeuge bereitgestellt werden können.

Eine vergleichbare Offenbarung findet sich in der eingangs erwähnten WO 20067050551 A2.

Vor diesem Hintergrund liegt der vorliegenden Erfindung die Aufgabe zugrunde, eine Werkzeugmaschine der eingangs genannten Art bereitzustellen, bei der prinzipiell eine unbegrenzte Anzahl von Werkzeugen schnell in die zumindest eine Werkzeugspindel eingewechselt werden kann, ohne dass die Bearbeitungszeiten der neuen Werkzeugmaschine bei einem hohen Durchsatz von Werkzeugen beeinträchtigt werden. Ferner soll die neue Werkzeugmaschine konstruktiv einfach aufgebaut sein und einen geringen Platzbedarf aufweisen.

Erfindungsgemäß wird diese Aufgabe bei der eingangs erwähnten Werkzeugmaschine dadurch gelöst, dass das Maschinenmagazin zwei Paare von zwei je in einem ersten Abstand zueinander angeordneten Speicherplätzen für die oder jede Werkzeugspindel aufweist, wobei zwei benachbarte Speicherplätze aus verschiedenen Paaren einen zweiten Abstand zueinander aufweisen, der größer ist als der erste Abstand.

Bei dem eingangs erwähnten Verfahren wird diese Aufgabe dementsprechend erfindungsgemäß dadurch gelöst, dass das Maschinenmagazin zwei Paare von je zwei in einem ersten Abstand zueinander angeordneten Speicherplätzen für die oder jede Werkzeugspindel aufweist, wobei zwei benachbarte Speicherplätze aus verschiedenen Paaren einen zweiten Abstand zueinander aufweisen, der größer ist als der erste Abstand, wobei zum Werkzeugwechsel das Maschinenmagazin über den ersten Abstand und zum Werkzeugaustausch über den zweiten Abstand verfahren wird.

Die der Erfindung zugrunde liegende Aufgabe wird auf diese Weise vollkommen gelöst.

Dabei ist von Vorteil, dass zwei in einem Paar benachbarte Speicherplätze dazu verwendet werden, in den ersten Speicherplatz das auszuwechselnde Werkzeug aus der Werkzeugspindel abzugeben und aus dem räumlich nahen zweiten Speicherplatz das neu zu verwendende, aktuelle Werkzeug aufzunehmen.

Das Werkzeugmagazin muss dabei nur eine sehr kurze Strecke verfahren, so dass der Werkzeugwechsel insgesamt sehr schnell erfolgt und die Nebenzeit, die für das Auswechseln der Werkzeuge an der Werkzeugspindel sozusagen unproduktiv verstreicht, noch einmal reduziert werden kann.

Mit anderen Worten, während des Werkzeugwechsels an der Werkzeugspindel wird das Maschinenmagazin über den ersten Abstand und zum Werkzeugaustausch zwischen Maschinenmagazin und Hintergrundmagazin über den längeren zweiten Abstand verfahren.

Auf den ersten Blick erscheint es nicht zielführend, statt eines tatsächlichen Maschinenmagazins, in dem 20, 30 oder 40 Werkzeuge zwischengelagert sind, ein "kleines" Maschinenmagazin einzusetzen, in dem nur vier Werkzeuge für die oder jede Werkzeugspindel zwischengelagert sind.

Der Erfinder der vorliegenden Anmeldung hat jedoch erkannt, dass es auch bei vier Werkzeugspeicherplätzen im Maschinenmagazin möglich ist, die theoretisch unbegrenzte Anzahl von Werkzeugen aus dem Hintergrundmagazin für die Werkzeugspindel zur Verfügung zu stellen, und dennoch den schnellen Werkzeugwechsel durch das Zusammenwirken zwischen Maschinenmagazin und Werkzeugspindel beizubehalten.

Der Erfinder der vorliegenden Anmeldung hat nämlich ferner erkannt, dass während der Hauptzeit, während der also die Werkzeugspindel mit dem aktuell eingespannten Werkzeug aus der Werkzeugwechselposition zu dem Werkstück fährt, dieses bearbeitet und dann in die Werkzeugwechselposition zurückfährt, das Maschinenmagazin genügend Zeit hat, um mit dem Hintergrundmagazin den Austausch von einem Werkzeug vorzunehmen.

Es ist nämlich für jeden Arbeitsvorgang lediglich erforderlich, ein bereits benutztes Werkzeug aus dem Maschinenmagazin in das Hintergrundmagazin zu überführen und ein neues Werkzeug aus dem Hintergrundmagazin in das Maschinenmagazin einzulegen.

Während dieser Hauptzeit ist hinreichend Zeit vorhanden, um das Hintergrundmagazin entsprechend zu verfahren, so dass Werkzeuge abgelegt und ausgeschleust werden können.

In dem Maschinenmagazin sind dann nur maximal vier Werkzeuge für die oder jede Werkzeugspindel zwischengelagert, das letzte Werkzeug, das aktuell zum Einsatz kommende Werkzeug und das als nächstes zum Einsatz kommende Werkzeug, wobei entweder das übernächste oder das vorletzte Werkzeug ebenfalls noch gespeichert werden können.

Damit wird ein Austausch eines Werkzeuges an dem Maschinenmagazin während der verglichen mit der Nebenzeit längeren Hauptzeit möglich. Während der Nebenzeit erfolgt nur der Werkzeugwechsel an der Werkzeugspindel.

Der Werkzeugwechsel an der oder den Werkzeugspindeln und der Werkzeugaustausch zu dem Hintergrundmagazin kann zeitgleich erfolgen, wobei der Austausch zwischen dem Maschinenmagazin und dem Hintergrundmagazin spätestens dann beendet sein muss, wenn die oder jede Werkzeugspindel das oder jedes zuletzt verwendete Werkzeug in das Maschinenmagazin abgelegt hat.

Bevorzugt ist es, wenn der Werkzeugwechsel an der oder den Werkzeugspindeln und der Werkzeugwechsel an dem Hintergrundmagazin synchron erfolgen, denn dann lassen sich die Bewegungsbaläufe mechanisch koppeln, was den konstruktiven Aufwand und den Steuerungsaufwand verringert.

Von besonderem Vorteil bei der neuen Werkzeugmaschine ist das geringe Gewicht des Maschinenmagazins, denn es muss lediglich vier Speicherplätze für die maximal vier Werkzeuge vorrätig halten. Diese vier Speicherplätze können an einem Tellermagazin oder an einem Kettenmagazin ausgebildet sein.

Das neue Verfahren kann selbst bei bestehenden Werkzeugmaschinen eingesetzt werden, wenn nämlich bei der aus der eingangs erwähnten DE 102 25 143 A1 bekannten Werkzeugmaschine bis auf vier Kettenplätze alle Speicherplätze entfernt werden, wodurch das Gewicht des bekannten Maschinenmagazins deutlich verringert wird.

Bei einem deutlich verringerten Gewicht des Maschinenmagazins ergeben sich verschiedene Zeitvorteile. Zum einen lässt sich das Maschinenmagazin selbst sehr viel schneller schalten, also teilen, die Beschleunigungs- und Bremszeiten sind bei dem geringeren Gewicht deutlich niedriger als bei Maschinenmagazinen, die 20 oder 40 Werkzeuge an entsprechenden Werkzeugspeicherplätzen mitbewegen müssen.

Zum anderen lässt sich aber auch die Werkzeugspindel selbst schneller verfahren, denn die Masse des zumindest in x-Richtung über den Schlitten mitbewegten Maschinenmagazins ist deutlich geringer als im Stand der Technik, so dass auch hier eine bessere Beschleunigung und damit geringere Verfahrzeiten erreichbar sind.

Schließlich ist auch das Einfahren und Ausfahren des Maschinenmagazins an der Werkzeugwechselposition schneller zu realisieren.

Dies führt dazu, dass sowohl die Hauptzeit als auch die Nebenzeit verringert werden, was bei der neuen Werkzeugmaschine zu einem höheren Durchsatz führt.

Ein weiterer Vorteil bei der neuen Werkzeugmaschine ist darin zu sehen, dass sie sehr einfach zu steuern ist. Auf die Reihenfolge der Werkzeuge in dem Maschinenmagazin muss keine besondere Achtung mehr gelegt werden, denn es sind zeitgleich immer nur zwei, drei oder vier Werkzeuge je Werkzeugspindel in dem Maschinenmagazin vorhanden.

Auch die Reihenfolge der Werkzeuge in dem Hintergrundmagazin ist für die Schnelligkeit des gesamten Bearbeitungsprozesses nur noch von untergeordneter Bedeutung, denn während der Hauptzeit hat das Hintergrundmagazin genügend Zeit, das jeweils als nächstes in das Maschinenmagazin einzuwechselnde Werkzeug bereitzustellen.

Selbstverständlich ist es dabei möglich, die Werkzeuge in dem Hintergrundmagazin so abzulegen, dass ihre räumliche Anordnung auch der zeitlichen Abfolge entspricht, in der sie bei dem jeweiligen Prozess verwendet werden sollen.

Dieses Verfahren ist prinzipiell aus dem Stand der Technik bekannt. So beschreibt beispielsweise die DE 43 11 469 A1 ein Verfahren zum Werkzeugwechsel, bei dem neben dein einzuwechselnden Werkzeug eine Leerstelle geschaffen wird, in die das auszuwechselnde Werkzeug abgelegt wird. Die Leerstelle wird dabei dadurch geschaffen, dass ein Werkzeug in einem speziellen Greifer zwischengelagert wird.

Die DE 10 2006 028 970 A beschreibt eine Weiterentwicklung dieser Werkzeugwechselstrategie, bei der die Werkzeuge beim Zurücklegen in das Maschinenmagazin weitgehend in der Reihenfolge abgelegt werden, in der sie in der zeitlichen Abfolge der Bearbeitung zum Einsatz kommen.

Diese Art der Sortierung der Werkzeuge kann auch bei der neuen Werkzeugmaschine und dem neuen Verfahren verwendet werden, nur ist es jetzt nicht mehr erforderlich, einen gesonderten Greifer für die Zwischenlagerung von Werkzeugen zu verwenden, die zur Bereitstellung von Leerstellen ausgelagert wurden.

In dem Hintergrundmagazin können nämlich prinzipiell so viele Leerstellen bereitgestellt werden, dass eine entsprechende Sortierung der Werkzeuge in die zeitliche Abfolge während des ersten Durchlaufes bei der Bearbeitung eines neuen Werkstückes sozusagen automatisch erfolgt.

Erfindungsgemäß erhält das Maschinenmagazin somit vier Speicherplätze für jede Werkzeugspindel.

Dabei ist von Vorteil, dass das Schalten oder Teilen der Maschinenmagazine auf ein Minimum beschränkt wird, denn jedes Werkzeug wird in den Speicherplatz wieder abgelegt, aus dem es zuvor von der Werkzeugspindel entnommen wurde.

Bei dem Verfahren ist es dabei bevorzugt, wenn während der Zeitspanne, in der die Werkzeugspindel mit einem aktuellen Werkzeug aus der Werkzeugwechselposition ein Werkstück anfährt und bearbeitet sowie danach in die Werkzeugwechselposition zurückkehrt, ein zuvor von der Werkzeugspindel in das Maschinenmagazin abgelegtes altes Werkzeug an der Werkzeugtauschposition entnommen und vorzugsweise ein neues Werkzeug in einem freien Speicherplatz in dem Maschinenmagazin abgelegt wird.

Andererseits ist es bevorzugt, wenn während der Zeitspanne, in der die Werkzeugspindel mit einem aktuellen Werkzeug aus der Werkzeugwechselposition ein Werkstück anfährt und bearbeitet sowie danach in die Werkzeugwechselposition zurückkehrt, ein neues Werkzeug von dem Hintergrundmagazin an der Werkzeugaustauschposition bereitgestellt wird.

Wenn der Werkzeugwechsel zwischen Werkzeugspindel und Maschinenmagazin sowie zwischen Maschinenmagazin und Hintergrundmagazin dann zeitgleich erfolgt, stellt das Hintergrundmagazin während der Hauptzeit an der Werkzeugaustauschposition zu dem Maschinenmagazin ein neues Werkzeug bereit.

Das alte Werkzeug ist dabei entweder das als letztes abgelegte Werkzeug oder das als vorletztes abgelegte Werkzeug, wobei das neue Werkzeug das als nächstes zu verwendende Werkzeug oder das als übernächstes zu verwendende Werkzeug ist.

Diese Maßnahmen bringen den bereits erwähnten Vorteil, dass während der Hauptzeit ein neues Werkzeug in dem oder für das Maschinenmagazin bereitgestellt werden kann, so dass während der Nebenzeit ein sehr schneller Wechsel des Werkzeuges an der Werkzeugspindel möglich ist.

Wegen des geringen Gewichtes des Maschinenmagazins kann auch die Hauptzeit noch einmal verringert werden, weil die Werkzeugspindel sehr schnell verfahren werden kann.

Wegen der geringen Anzahl von Werkzeugen in dem Maschinenmagazin reduziert sich zum anderen auch die Nebenzeit, weil der Werkzeugwechsel optimal schnell geplant werden kann.

Allgemein ist es dabei bevorzugt, wenn die Werkzeugmaschine einen in einer ersten Raumrichtung verfahrbaren Schlitten aufweist, auf dem ein in einer zweiten Raumrichtung verfahrbarer Ständer gelagert ist, an dem ein in einer dritten Raumrichtung verfahrbarer Spindelkopf gelagert ist, in dem drehbar die Werkzeugspindel gelagert ist, und wenn das Maschinenmagazin an dem Schlitten gelagert ist, wobei das Maschinenmagazin vorzugsweise derart gelagert ist, dass es zwischen einer Werkzeugwechselposition, in der Werkzeuge zwischen dem Maschinenmagazin und der Werkzeugspindel gewechselt werden, und einer Werkzeugtauschposition verfahrbar ist, an der Werkzeuge zwischen dem Hintergrundmagazin und dem Maschinenmagazin gewechselt werden.

Bei diesen Maßnahmen, die prinzipiell bereits aus der eingangs erwähnten DE 102 25 143 A1 bekannt sind, ist von Vorteil, dass sie eine so genannte Fahrständermaschine mit vertikaler Werkzeugspindel beschreiben, die von sich aus schon für sehr kurze Werkzeugwechselzeiten und sehr kurze Nebenzeiten sowie optimal kurze Hauptzeiten sorgt.

Es sei noch erwähnt, dass für das Maschinenmagazin bei der neuen Werkzeugmaschine nur ein sehr geringer Platzbedarf besteht, während für das Hintergrundmagazin, das an dem Maschinengestell oder gesondert von dem Maschinengestell aufgebaut sein kann, quasi beliebig viel Platz verfügbar ist. Das Hintergrundmagazin kann beispielsweise als Regalmagazin ausgelegt sein, wobei jede andere Art des Hintergrundmagazins ebenfalls erfindungsgemäß einsetzbar ist.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: in schematischer Seitenansicht die neue Werkzeugmaschine;
- Fig. 2: in schematischer Draufsicht das Zusammenwirken von Werkzeugspindel, Maschinenmagazin und Hintergrundmagazin für ein erstes Ausführungsbeispiel des Maschinenmagazins das nicht Gegenstand der vorliegenden Erfindung ist;
- Fig. 3: die Verfahrensschritte zum Werkzeugwechsel und Werkzeugaustausch bei dem Maschinenmagazin aus Fig. 2;
- Fig. 4: ein erfindungsgemäßes Ausführungsbeispiel für ein Maschinenmagazin, in einer Darstellung wie Fig. 2;
- Fig. 5: die einzelnen Schritte bei dem Werkzeugwechsel und Werkzeugaustausch für das Maschinenmagazin aus Fig. 4;
- Fig. 6: ein zweites erfindungsgemäßes Ausführungsbeispiel für ein Maschinenmagazin, in einer Darstellung wie Fig. 4; und
- Fig. 7: ein drittes erfindungsgemäßes Ausführungsbeispiel für ein Maschinenmagazin, in einer Darstellung wie Fig. 4.

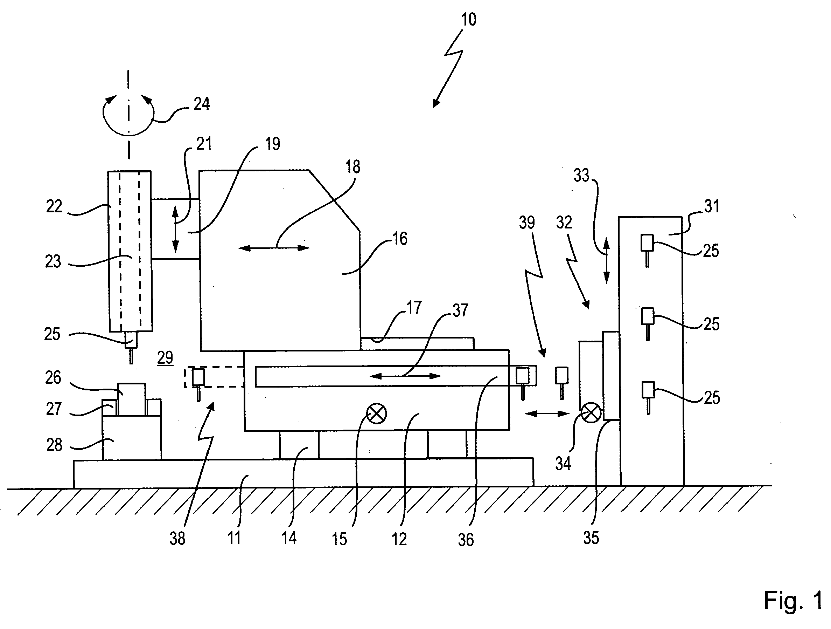

In Fig. 1 ist mit 10 sehr schematisch eine Werkzeugmaschine in Seitenansicht gezeigt. Die Werkzeugmaschine 10 ist eine Fahrständermaschine, bei der auf einem Maschinengestell 11 ein Schlitten 12 angeordnet ist, der auf Führungen 14 in x-Richtung 15 verfahrbar ist.

Auf dem x-Schlitten 12 verfährt ein Fahrständer 16 auf Führungen 17, die sich in y-Richtung 18 erstrecken.

An dem Fahrständer 16 ist ein Schlitten 19 angeordnet, der in z-Richtung 21 verfahrbar, also höhenverstellbar ist.

Der Schlitten 21 trägt einen Spindelkopf 22, in dem zumindest eine Werkzeugspindel 23 in an sich bekannter Weise um eine Drehachse 24 drehbar gelagert ist. Der Spindelkopf kann auch 2 oder 4 Werkzeugspindeln tragen, mit denen dann zwei oder 4 Werkstücke zeit- und konturgleich bearbeitet werden können.

Die Werkzeugspindel 23 weist an ihrem unteren Ende eine übliche Werkzeugaufnahme zum Einspannen eines Werkzeuges 25 auf, mit dem ein Werkstück 26 bearbeitet wird, das in einer Vorrichtung 27 gehalten wird, die auf einem Werkstücktisch 28 im Arbeitsraum 29 angeordnet ist.

Auf diese Weise kann die Werkzeugmaschine 10 mit Hilfe eines Werkzeuges 25 das Werkstück 26 in den drei orthogonalen Raumachsen 15, 18, 21 bearbeiten.

Hinter der Werkzeugmaschine 10 ist getrennt von dem Maschinengestell 11 ein Hintergrundmagazin 31 aufgebaut, in dem zahlreiche Werkzeuge 25 zwischengelagert sind.

Selbstverständlich ist es auch möglich, das Hintergrundmagazin 31 fest mit dem Maschinengestell 11 zu verbinden.

Lediglich der guten Ordnung halber sei erwähnt, dass die Erfindung auch mit einer Werkzeugmaschine realisierbar ist, bei der die oder jede Werkzeugspindel 23 nicht vertikalachsig sondern horizontalachsig ausgerichtet ist, wobei ferner nicht alle drei Bewegungsachsen 15, 18, 21 in dem Werkzeug 25 realisiert sein müssen; zumindest eine Bewegungsachse kann auch in dem Werkstück 26 realisiert sein, wie dies prinzipiell aus dem Stand der Technik bekannt ist.

An dem Hintergrundmagazin 31 ist eine schematisch dargestellte Übergabevorrichtung 32 angeordnet, die in drei Fahrachsen 33, 34, 35, die orthogonal zueinander verlaufen, an dem Hintergrundmagazin 31 verfährt und Werkzeuge in dem Hintergrundmagazin 31 ablegt oder aus dem Hintergrundmagazin 31 entnimmt.

In der gezeigten Darstellung ist das Hintergrundmagazin 31 ein Regalmagazin.

Mit dem Hintergrundmagazin 31 wirkt ein Maschinenmagazin 36 zusammen, das an dem x-Schlitten 12 mitfahrend angeordnet ist. Dieses Maschinenmagazin 36 ist in der durch einen Doppelpfeil 37 angedeuteten Richtung zum einen so verfahrbar, dass es mit seinem vorderen Ende in den Arbeitsraum 29 hineinragt und dort eine Werkzeugwechselposition 38 für die Werkzeugspindel 23 bereitstellt. Die Werkzeugwechselposition 38 ist in Fig. 1 gestrichelt dargestellt.

In der durchgezogen dargestellten Position des Maschinenmagazins 36 befindet es sich mit seinem hinteren Ende in einer Werkzeugaustauschposition 39, in der Werkzeuge 25 zwischen dem Maschinenmagazin 36 und dem Hintergrundmagazin 31 mit Hilfe der Übergabevorrichtung 32 ausgetauscht werden können.

Bei dem Maschinenmagazin 36 in Fig. 1 ist die Anordnung nun so getroffen, dass es vier Werkzeuge 25 zwischenspeichern kann, also nur drei oder vier Speicherplätze aufweist.

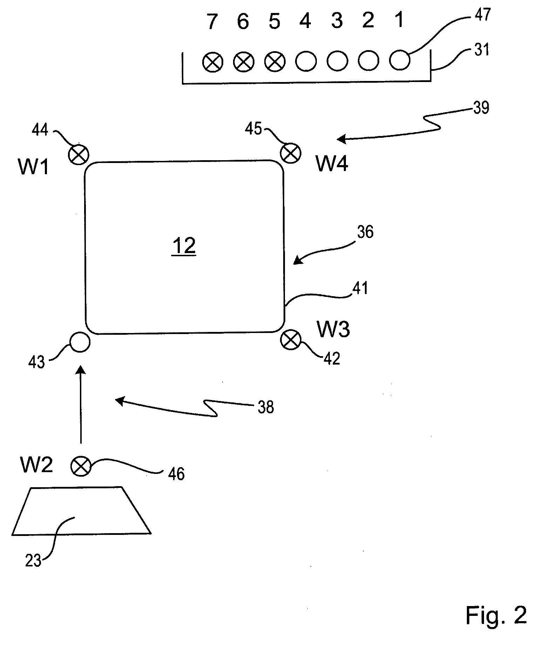

In Fig. 2 ist in Draufsicht und sehr schematisch das Zusammenwirken eines nicht erfindungsgemäßen Maschinenmagazins 36 mit der Werkzeugspindel 23 einerseits und dem Hintergrundmagazin 31 andererseits gezeigt.

Das Maschinenmagazin 36 ist ein Kettenmagazin mit einer umlaufenden Kette 41, an der vier Speicherplätze 42, 43, 44 und 45 vorgesehen sind.

Die Werkzeugspindel 23 weist in bekannter Weise eine Werkzeugaufnahme 46 auf, in die an der Werkzeugwechselposition 38 Werkzeuge 25 ein- und ausgewechselt werden können.

In dem ebenfalls schematisch dargestellten Hintergrundmagazin 31 sind sieben Speicherplätze 47 für Werkzeuge vorgesehen, wobei die Speicherplätze 1 bis 4 zurzeit leer sind, in den Speicherplätzen 5 bis 7 befinden sich Werkzeuge W5, W6 und W7. Die Werkzeuge W1, W3 und W4 befinden sich in den Speicherplätzen 44, 45 und 42 des Maschinenmagazins 36, während das Werkzeug W2 in die Werkzeugaufnahme 46 eingespannt ist und zur Bearbeitung eines Werkstückes 26 verwendet wurde und jetzt ausgetauscht werden soll.

Selbstverständlich sind die Speicherplätze 47 in dem Hintergrundmagazin 31 nicht zwingend in der zeitlichen Abfolge angeordnet, in der die Werkzeuge 25 der Reihe nach verwendet werden, die chronologische Darstellung ist in Fig. 2 lediglich der Übersichtlichkeit halber gewählt.

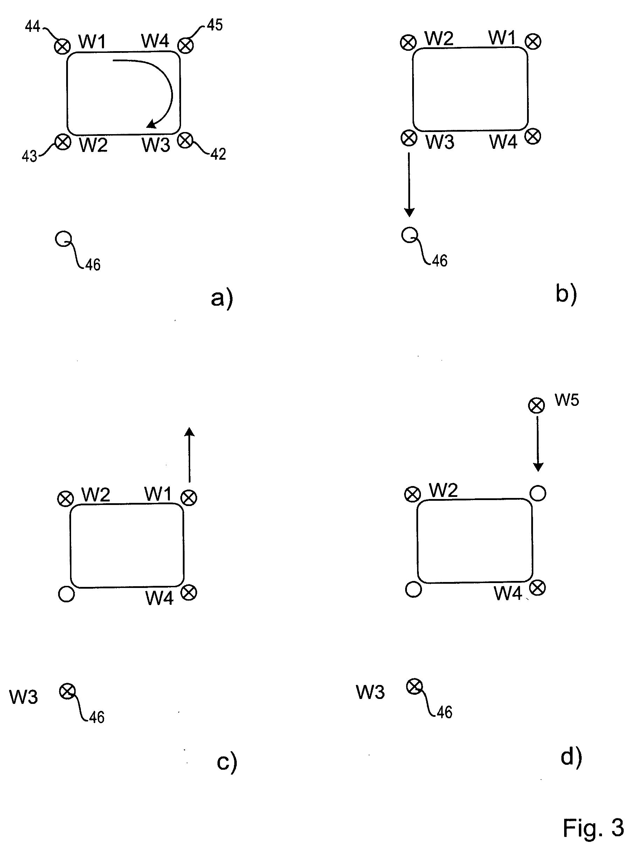

In Fig. 3a bis 3d ist jetzt gezeigt, wie das Werkzeug W2 gegen das Werkzeug W3 ausgewechselt und gleichzeitig das Werkzeug W1 in das Hintergrundmagazin 31 zurückgeführt und dafür das Werkzeug W5 in das Maschinenmagazin 36 eingelegt wird.

In Fig. 3a ist zu erkennen, dass zunächst das Werkzeug W2 aus der Werkzeugaufnahme 46 in den Speicherplatz 43 eingelegt wurde.

Danach teilt sich das Maschinenmagazin 31. Die Speicherplätze 42, 43, 44, 45 werden also im Uhrzeigersinn um eine Position weitergefahren, so dass sich die Situation in der Fig. 3b ergibt.

Als nächstes wird jetzt das Werkzeug W3 in die Werkzeugaufnahme 46 überführt, so dass sich die Situation der Fig. 3c ergibt. Danach wird das Werkzeug W1 aus dem Speicherplatz 45 entnommen und in das Hintergrundmagazin 31 überführt; siehe Fig. 3c.

Als letztes wird das neue Werkzeug W5 aus dem Regalmagazin 31 in den Speicherplatz 44 eingelegt; sieh Fig. 3d.

Somit ergibt sich jetzt in Fig. 3d eine vergleichbare Situation wie in Fig. 2, nur ist jetzt das Werkzeug W3 das aktuell im Einsatz befindliche Werkzeug, während das Werkzeug W2 als nächstes in dem Hintergrundmagazin 31 abgelegt wird, aus dem dann das Werkzeug W6 entnommen wird.

Das Werkzeug W4 wird als nächstes verwendet, während das Werkzeug W5 als übernächstes verwendet wird.

Bei dem insoweit beschriebenen Verfahren zum Werkzeugwechsel ist insbesondere von Vorteil, dass das Maschinenmagazin 31 nur wenige Schaltbewegungen durchführen muss, denn jedes Werkzeug wird genau dort von der Werkzeugspindel 23 wieder abgelegt, wo es aufgenommen wurde.

Ferner ergeben sich die bereits erwähnten Vorteile, dass nämlich nur eine sehr geringe Anzahl von Speicherplätzen 42, 43, 33 und 45 bereitgehalten werden muss, so dass sowohl das Schalten des Maschinenmagazins 36 als auch die Bewegung des y-Schlittens 12 sehr schnell vonstatten geht.

Die Verfahrensschritte, die von Fig. 2 über Fig. 3a und Fig. 3b zu Fig. 3c geführt haben, sind so genannte Nebenzeit, während der keine Bearbeitung eines Werkstückes möglich ist.

Während des Auswechselns des Werkzeuges W1 und des Einwechselns des Werkzeuges W5, wie es in den Fig. 3c und 3d dargestellt ist, kann die Werkzeugspindel 23 jedoch mit dem Werkzeug W3 ein Werkstück bearbeiten, dies ist die so genannte Hauptzeit.

Die Schritte in Fig. 3b) und 3c) sowie die Schritte in Fig. 2 und 3d) können auch zeitgleich erfolgen, insbesondere dann, wenn der Werkzeugwechsel an der Werkzeugwechselposition 38 und der Werkzeugaustauschposition 39 mechanisch synchronisiert wird.

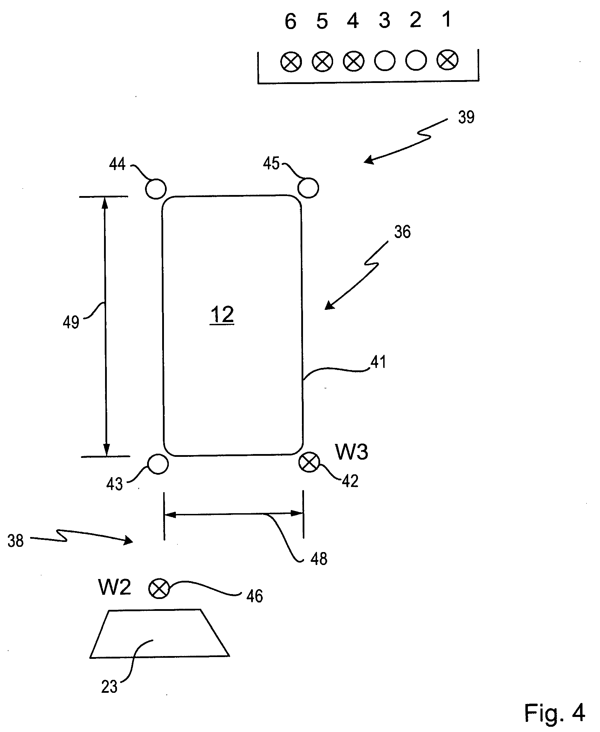

In Fig. 4 ist ein zu der Erfindung gehörendes Maschinenmagazin 36 gezeigt, das ebenfalls vier Speicherplätze 42, 43, 44 und 45 aufweist. Während bei dem Werkzeugmagazin 36 aus Fig. 2 in der Kette 41 benachbarte Speicherplätze 42, 43, 44, 45 zueinander gleiche Abstände aufweisen, sind bei dem Werkzeugmagazin 36 aus Fig. 4 zwei Paare von Speicherplätzen 42, 43 sowie 44, 45 vorgesehen, in denen die Speicherplätze 42 und 43 bzw. 44 und 45 zueinander einen geringen Abstand 48 aufweisen, während in verschiedenen Paaren befindliche, in der Kette 41 benachbarte Werkzeuge, also 43 und 44 sowie 45 und 42, zueinander einen größeren Abstand 49 aufweisen.

Diese asymmetrische Anordnung des Maschinenmagazins 36 lässt sich insbesondere bei einem Kettenmagazin realisieren, wenn nämlich jeweils zwei in der Kette 41 benachbarte Speicherplätze 42; 43 bzw. 44; 45 sehr eng nebeneinander liegen, aber zu dem in der Kette 41 diametral gegenüberliegenden Paar 44; 45 bzw. 42; 43 einen sehr viel größeren Abstand 49 aufweisen.

Der Abstand 48 überspannt dann beispielsweise den minimalen Abstand, den zwei Speicherplätze in einer Kette 41 haben müssen, während der Abstand 49 die Distanz von dem Arbeitsraum 29 zu dem Hintergrundmagazin 31 überspannt.

Wenn jetzt beispielsweise der Speicherplatz 42 in die Position des Speicherplatzes 43 gefahren werden soll, ist nur eine sehr kurze Fahrstrecke und damit extrem schnelles Verfahren erforderlich, während für den Fall, dass der Speicherplatz 43 in die Position des Speicherplatzes 44 verfahren werden muss, sehr viel mehr Fahrzeit erforderlich ist.

Vor diesem Hintergrund wird das Überbrücken des Abstandes 48 während der Nebenzeit genutzt, um extrem kurze Werkzeugwechselzeiten zu realisieren, während das Überbrücken des Abstandes 49 während der Hauptzeit erfolgt, während der also die Werkzeugspindel 23 mit dem eingespannten Werkzeug W2 ein Werkstück bearbeitet.

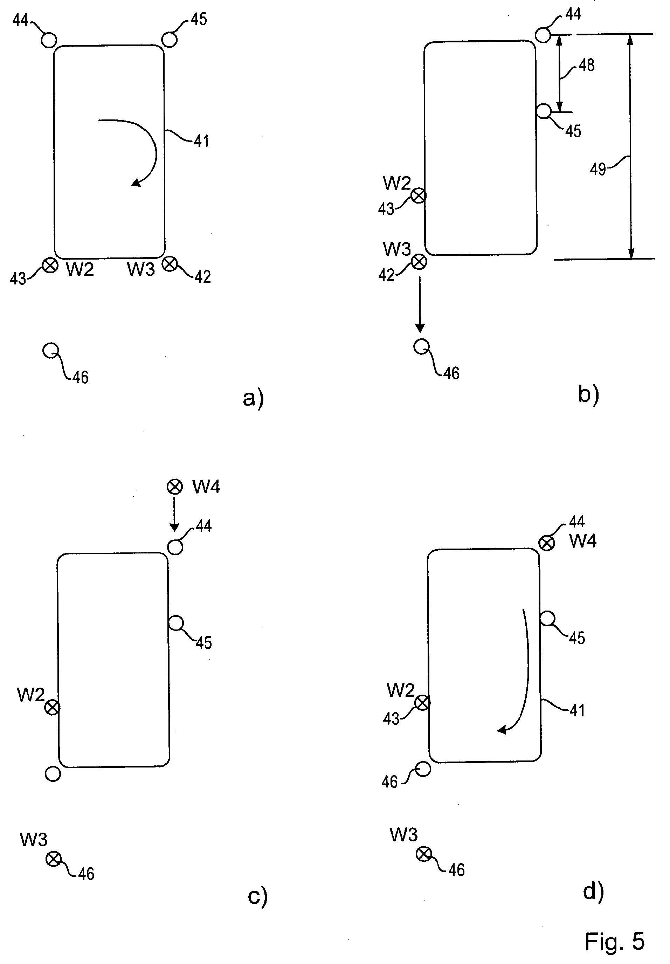

In Fig. 4 ist eine vergleichbare Ausgangsposition wie in Fig. 2 gezeigt, so dass als erstes das Werkzeug W2 aus der Werkzeugaufnahme 46 in dem Speicherplatz 43 abgelegt ist, wie es in Fig. 5a zu sehen ist. Allerdings ist nur ein nächstes Werkzeug W3 in der Kette 41 zwischengelagert.

Danach schaltet das Maschinenmagazin 36 die Kette 41 um die Distanz 48 weiter, so dass sich die Situation in Fig. 5b ergibt, in der sich jetzt der leere Speicherplatz 44 an der Werkzeugaustauschposition 39 befindet, wie ein Vergleich mit Fig. 4 zeigt.

Gleichzeitig ist das als nächstes zu verwendende Werkzeug W3 in die Werkzeugwechselposition 38 verschoben worden, so dass es jetzt in die Werkzeugaufnahme 46 eingewechselt werden kann, wie es in Fig. 5c zu sehen ist.

Sobald der Zustand gemäß Fig. 5c erreicht ist, kann die Werkzeugspindel 23 mit dem Werkstück W3 das Werkstück bearbeiten, während jetzt hauptzeitparallel das Werkzeug W4 in den Speicherplatz 44 eingelegt wird, wie es in Fig. 5d zu sehen ist.

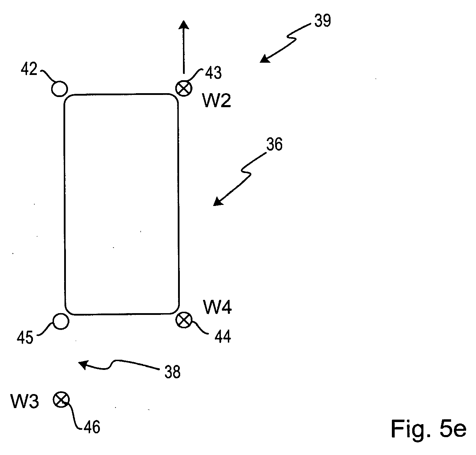

Danach schaltet das Werkzeugmagazin erneut, bis wieder die vier Eckpunkte des Rechteckes mit Speicherplätzen belegt sind. Diese Situation ist in Fig. 5e gezeigt, wo der leere Speicherplatz 45 in der Werkzeugwechselposition 38 ist, so dass er als nächstes das Werkzeug W3 aus der Werkzeugaufnahme 46 entnehmen kann.

Direkt daneben, also in dem kurzen Abstand 48, befindet sich das Werkzeug W4, das als nächstes eingesetzt werden soll. In der Werkzeugaustauschposition 39 befindet sich der Speicherplatz 43 mit dem Werkzeug W2, das jetzt aus dem Maschinenmagazin 36 entnommen wird.

Im Gegensatz zu dem Maschinenmagazin 36 aus Fig. 2 befinden sich bei dem Maschinenmagazin 36 aus Fig. 4 gleichzeitig nicht vier sondern höchstens zwei Werkzeuge in der Kette 41, was ebenfalls zu einer Gewichtsreduzierung und damit zu einer schnelleren Verfahrmöglichkeit beiträgt.

Dennoch benötigt auch das Werkzeugmagazin 36 aus Fig. 4 insgesamt vier Speicherplätze 42, 43, 44 und 45, es sind jedoch höchstens zwei benachbarte Speicherplätze 42, 43, 44, 45 mit einem Werkzeug 25 belegt.

Die Nebenzeit liegt hier in den Schritten gemäß Fig. 5a und Fig. 5b. Wegen des kurzen Verfahrweges über die Strecke 48 ist die Nebenzeit hier extrem kurz.

Abschließend sei noch erwähnt, dass in den Fig. 2 bis 5 nicht gezeigt ist, ob das Maschinenmagazin 36 zwischen dem Werkzeugwechsel an der Werkzeugwechselposition 38 und dem Werkzeugaustausch an der Werkzeugaustauschposition 39 in Richtung des Pfeils 37 aus Fig. 1 verfahren werden muss oder nicht.

Für den Fall, dass das Maschinenmagazin 36 nicht verfahren werden muss, kann ein Werkzeugwechsel an der Werkzeugwechselposition 38 sowie ein Werkzeugaustausch an der Werkzeugaustauschposition 39 zumindest teilweise auch zeitgleich erfolgen, was die Nebenzeit weiter reduzieren kann.

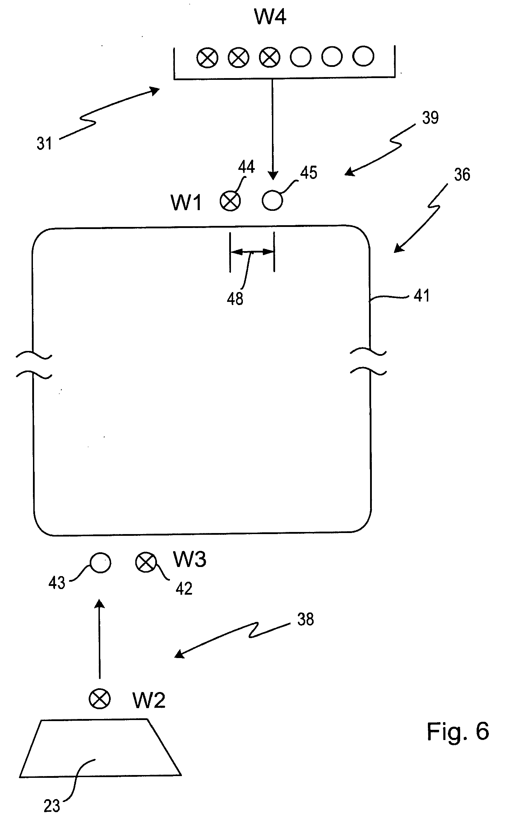

Das Maschinenmagazin 36 aus Fig. 4 kann auch so angeordnet sein, dass die in dem geringen Abstand 48 zueinander angeordneten Speicherplätze 42, 43 und 44, 45 nicht in den Umlenkecken der Kette 41 liegen sondern dazwischen, also so, wie es in Fig. 6 gezeigt ist.

In der Ausgangsposition der Fig. 6 befindet sich die Werkzeugspindel 23 mit dem zuletzt verwendeten Werkzeug W2 in der Werkzeugwechselposition 38 und das Maschinenmagazin 36 mit dem schon zuvor ausgewechselten Werkzeug W1 in der Werkzeugaustauschposition 39.

In einem ersten Schritt werden jetzt zeitgleich die Werkzeuge W2 und W4 in den Speicherplätzen 43 und 45 des Maschinenmagazins 36 abgelegt. Danach verfährt das Maschinenmagazin 36 um den Abstand 48, so dass sich nun die Speicherplätze 42 und 44 in der Werkzeugwechselposition 38 bzw. der Werkzeugaustauschposition 39 befinden.

Zeitgleich werden dann das Werkzeug W3 in die Werkzeugspindel 23 und das Werkzeug W1 in den zuvor von dem Werkzeug W4 besetzen und nun leeren Speicherplatz in dem Hintergrundmagazin 31 überführt.

Jetzt beginnt die Hauptzeit, während der die Werkzeugspindel 23 mit dem Werkzeug W3 ein Werkstück bearbeitet. Zeitgleich verfährt das Hintergrundmagazin 31 das Werkzeug W5 in die Werkzeugaustauschposition 39.

Wenn die Werkzeugspindel 23 jetzt wieder die Werkzeugwechselposition 38 anfährt, befindet sich die Werkzeugmaschine wieder in der Verfahrenssituation gemäß Fig. 6.

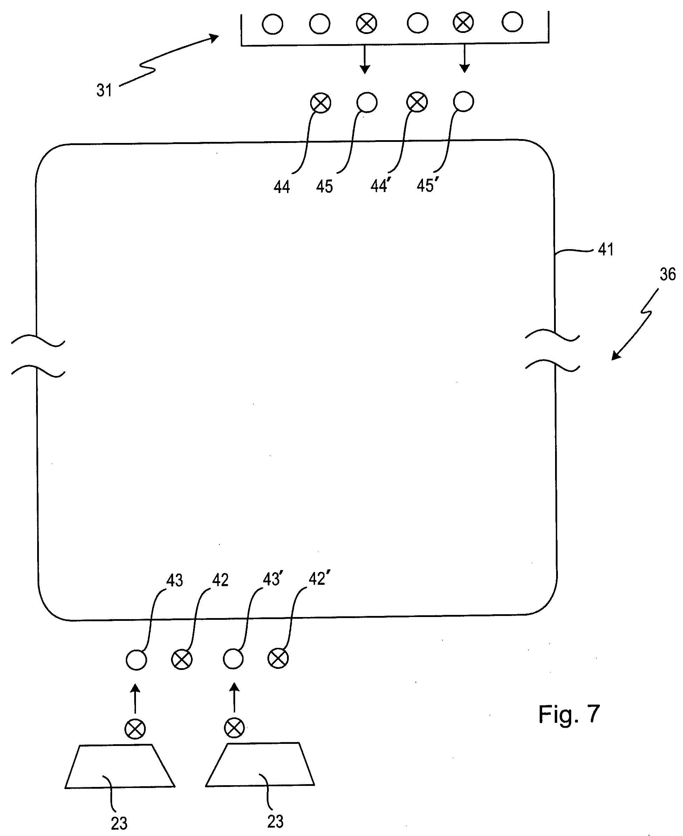

Wenn die Werkzeugmaschine mit zwei Werkzeugspindeln 23, 23' ausgestattet ist, sind in dem Maschinenmagazin 36 folglich 2 mal 4 Speicherplätze vorgesehen, wie es in Fig. 7 gezeigt ist.

Abgesehen von der Tatsache, dass jetzt sowohl an den Werkzeugspindeln 23, 23' als auch an dem Hintergrundmagazin 31 immer zwei Werkzeuge gewechselt werden, unterscheiden sich die mit Mehrspindelmaschinen durchführbaren Werkzeugwechselverfahren nicht von den oben beschriebenen Verfahren.

Die Speicherplätze 43, 42, 43' und 42' sowie die Speicherplätze 44, 45, 44' und 45' haben zueinander in der jeweiligen Gruppe den gleichen Abstand, der dem doppelten Abstand zwischen den Werkzeugspindeln 23, 23' entspricht.

## Patentansprüche

1. Werkzeugmaschine mit zumindest einer gegenüber einer Vorrichtung (27) zum Halten von Werkstücken (26) relativ in zumindest einer von drei Raumrichtungen (15, 18, 21) verfahrbaren Werkzeugspindel (23, 23'), in die Werkzeuge (25; W1-W7) zur Bearbeitung der Werkstücke (26) einspannbar sind, mit einem Maschinenmagazin (36), in dem zum Einwechseln in die zumindest eine Werkzeugspindel (23, 23') vorgesehene Werkzeuge (25; W1-W7) vorrätig gehalten werden, und mit einem Hintergrundmagazin (31), in dem zum Einwechseln in das Maschinenmagazin (36) vorgesehene Werkzeuge (25; W1-W7) vorrätig gehalten werden, wobei in dem Maschinenmagazin (36) für die oder jede Werkzeugspindel (23, 23')vier Speicherplätze (42, 43, 44, 45) zur Aufnahme von Werkzeugen (25; W1-W7) vorgesehen sind, **dadurch gekennzeichnet, dass** das Maschinenmagazin (36) zwei Paare (42, 43; 44, 45) von je zwei in einem ersten Abstand (48) zueinander angeordneten Speicherplätzen (42, 43; 44, 45) für die oder jede Werkzeugspindel (23, 23') aufweist, wobei zwei benachbarte Speicherplätze (43, 44; 45, 42) aus verschiedenen Paaren einen zweiten Abstand (49) zueinander aufweisen, der größer ist als der erste Abstand (48).

2. Werkzeugmaschine nach Anspruch 1, **dadurch gekennzeichnet, dass** das Maschinenmagazin (36) ein Kettenmagazin mit einer Kette (41) ist, an der die Speicherplätze (42, 43, 44, 45) angeordnet sind.

3. Werkzeugmaschine nach Anspruch 1 oder 2, **dadurch gekennzeichnet, dass** sie einen in einer ersten Raumrichtung (15) verfahrbaren Schlitten (12) aufweist, auf dem ein in einer zweiten Raumrichtung (18) verfahrbarer Ständer (16) gelagert ist, an dem ein in einer dritten Raumrichtung (21) verfahrbarer Spindelkopf (22) gelagert ist, in dem drehbar die oder jede Werkzeugspindel (23, 23') gelagert ist, und dass das Maschinenmagazin (36) an dem Schlitten (12) gelagert ist.

4. Werkzeugmaschine nach Anspruch 3, **dadurch gekennzeichnet, dass** das Maschinenmagazin (36) derart gelagert ist, dass es zwischen einer Werkzeugwechselposition (38), in der Werkzeuge (25; W1-W7) zwischen dem Maschinenmagazin (36) und der Werkzeugspindel (23) gewechselt werden, und einer Werkzeugaustauschposition (39) verfahrbar ist, an der Werkzeuge (25; W1-W7) zwischen dem Hintergrundmagazin (31) und dem Maschinenmagazin (36) gewechselt werden.

5. Verfahren zum Werkzeugwechsel an einer Werkzeugmaschine (10) mit zumindest einer gegenüber einer Vorrichtung (27) zum Halten von Werkstücken (26) relativ in zumindest einer von drei Raumrichtungen (15, 18, 21) verfahrbaren Werkzeugspindel (23, 23'), in die Werkzeuge (25; W1-W7) zur Bearbeitung der Werkstücke (26) einspannbar sind, einem Maschinenmagazin (36), in dem zum Einwechseln in die zumindest eine Werkzeugspindel (23, 23') vorgesehene Werkzeuge (25; W1-W7) vorrätig gehalten werden, und einem Hintergrundmagazin (31), in dem zum Einwechseln in das Maschinenmagazin (36) vorgesehene Werkzeuge (25; W1-W7) vorrätig gehalten werden, bei dem
die zumindest eine Werkzeugspindel (23, 23') in eine Werkzeugwechselposition (38) gefahren wird, an der Werkzeuge (25; W1-W7) zwischen dem Maschinenmagazin (36) und der zumindest einen Werkzeugspindel (23) gewechselt werden, und
eine Werkzeugaustauschposition (39) vorgesehen ist, an der Werkzeuge (25; W1-W7) zwischen dem Hintergrundmagazin (31) und dem Maschinenmagazin (36) gewechselt werden, wobei sich in dem Maschinenmagazin (36) maximal vier Werkzeuge (25; W1-W7) für jede Werkzeugspindel (23, 23') zur selben Zeit befinden,
**dadurch gekennzeichnet, dass** das Maschinenmagazin (36) zwei Paare (42, 43; 44, 45) von je zwei in einem ersten Abstand (48) zueinander angeordneten Speicherplätzen (42, 43, 44, 45) für die oder jede Werkzeugspindel (23, 23') aufweist, wobei zwei benachbarte Speicherplätze (43, 44; 45, 42) aus verschiedenen Paaren einen zweiten Abstand (49) zueinander aufweisen, der größer ist als der erste Abstand (48), wobei
zum Werkzeugwechsel eines alten Werkzeuges das Maschinenmagazin (36) über den ersten Abstand (48) und zum Werkzeugaustausch für die oder jede Werkzeugspindel (23, 23') über den zweiten Abstand (49) verfahren wird.

6. Verfahren nach Anspruch 5, **dadurch gekennzeichnet, dass** während der Zeitspanne, in der die Werkzeugspindel (23, 23') mit einem aktuellen Werkzeug (25, W3) aus der Werkzeugwechselposition (38) ein Werkstück (26) anfährt und bearbeitet sowie danach in die Werkzeugwechselposition (38) zurückkehrt, ein zuvor von der Werkzeugspindel (23, 23') in das Maschinenmagazin (36) abgelegtes altes Werkzeug (W1) an der Werkzeugaustauschposition (39) entnommen und vorzugsweise ein neues Werkzeug (W4, W5) in einen freien Speicherplatz (42, 43, 44, 45) in dem Maschinenmagazin (36) abgelegt wird.

7. Verfahren nach Anspruch 5, **dadurch gekennzeichnet, dass** während der Zeitspanne, in der die Werkzeugspindel (23, 23') mit einem aktuellen Werkzeug (25, W3) aus der Werkzeugwechselposition (38) sein Werkstück (26) anfährt und bearbeitet sowie danach in die Werkzeugwechselposition (38) zurückkehrt, ein neues Werkzeug (W4, W5) von dem Hintergrundmagazin (31) an der Werkzeugaustauschposition (39) bereitgestellt wird.

8. Verfahren nach Anspruch 7, **dadurch gekennzeichnet, dass** der Werkzeugwechsel zwischen Werkzeugspindel (23, 23') und Maschinenmagazin (36) zeitgleich zu dem Werkzeugaustausch zwischen Maschinenmagazin (36) und Hintergrundmagazin (31) erfolgt.

9. Verfahren nach einem der Ansprüche 6 bis 8, **dadurch gekennzeichnet, dass** das alte Werkzeug das als letztes abgelegte Werkzeug ist.

10. Verfahren nach einem der Ansprüche 6 bis 8, **dadurch gekennzeichnet, dass** das alte Werkzeug das als vorletztes abgelegte Werkzeug ist.

11. Verfahren nach einem der Ansprüche 6 bis 8, **dadurch gekennzeichnet, dass** das neue Werkzeug das als nächstes zu verwendende Werkzeug ist.

12. Verfahren nach einem der Ansprüche 6 bis 8, **dadurch gekennzeichnet, dass** das neue Werkzeug das als übernächstes zu verwendende Werkzeug ist.

## Claims

1. Machine tool comprising at least one tool spindle (23, 23') which is displaceable in at least one of three spatial directions (15, 18, 21) in relation to a device (27) for holding workpieces (26), and in which tool spindle tools (25; W1-W7) for processing the workpieces (26) can be chucked, a machine magazine (36) in which tools (25; W1-W7) provided for exchange into the at least one tool spindle (23, 23') are kept in store, and a background magazine (31) in which tools (25; W1-W7) provided for exchange into the machine magazine (36) are kept in store, wherein four storage places (42, 43, 44, 45) for accommodating tools (25; W1-W7) are provided in the machine magazine (36) for the or each tool spindle (23, 23'),
**characterized in that** the machine magazine (36) comprises for the or each tool spindle (23, 23') two pairs (42, 43; 44, 45) of two storage places (42, 43; 44, 45), which storage places are each spaced apart from one another at a first distance (48), wherein two adjacent storage places (43, 44; 45, 42) belonging to different pairs are spaced apart from one another at a second distance (49) which is larger than the first distance (48).

2. Machine tool according to Claim 1, **characterized in that** the machine magazine (36) is a chain magazine having a chain (41) on which the storage places (42, 43, 44, 45) are arranged.

3. Machine tool according to Claim 1 or, **characterized in that** said machine tool has a slide (12) which is displaceable in a first spatial direction (15) and on which a column (16) which is displaceable in a second spatial direction (18) is mounted, and on which column (16) a spindle head (22) which is displaceable in a third spatial direction (21) is mounted, the or each tool spindle (23, 23') being rotatably mounted in said spindle head (22), and **in that** the machine magazine (36) is mounted on the slide (12).

4. Machine tool according to Claim 3, **characterized in that** the machine magazine (36) is mounted in such a manner that it is displaceable between a tool-change position (38), in which tools (25; W1-W7) are exchanged between the machine magazine (36) and the tool spindle (23), and a tool-interchange position (39), in which tools (25; W1-W7) are exchanged between the background magazine (31) and the machine magazine (36).

5. Method for a tool change on a machine tool (10) comprising at least one tool spindle (23, 23') which is displaceable in at least one of three spatial directions (15, 18, 21) in relation to a device (27) for holding workpieces (26), and in which tool spindle tools (25; W1-W7) for processing the workpieces (26) can be chucked, a machine magazine (36) in which tools (25; W1-W7) provided for exchange into the at least one tool spindle (23, 23') are kept in store, and a background magazine (31) in which tools (25; W1-W7) provided for exchange into the machine magazine (36) are kept in store, in which method
the at least one tool spindle (23, 23') is moved into a tool-change position (38) in which tools (25; W1-W7) are exchanged between the machine magazine (36) and the at least one tool spindle (23), and
and wherein a tool-interchange position (39) is provided at which tools (25; W1-W7) are exchanged between the background magazine (31) and the machine magazine (36), wherein a maximum of four tools (25; W1-W7) for each tool spindle (23, 23') are situated in the machine magazine (36) at the same time,
**characterized in that** the machine magazine (36) has two pairs (42, 43; 44, 45) of two storage places (42, 43, 44, 45), which storage places are each spaced apart from one another at a first distance (48), wherein two adjacent storage places (43, 44; 45, 42) belonging to different pairs are spaced apart from one another at a second distance (49) which is larger than the first distance (48), wherein
for a tool change of a used tool, the machine magazine (36) is moved across the first distance (48) and, for a tool interchange for the or each tool spindle (23, 23'), is moved across the second distance (49).

6. Method according to Claim 5, **characterized in that**, during the period of time in which the tool spindle (23, 23') having a current tool (25, W3) approaches a workpiece (26) from the tool-change position (38) and processes said workpiece (26) and thereafter returns to the tool-change position (38), a used tool (W1) which has previously been deposited in the machine magazine (36) by the tool spindle (23, 23') is removed from at tool-interchange position (39) and preferably a new tool (W4, W5) is deposited into a vacant storage place (42, 43, 44, 45) in the machine magazine (36).

7. Method according to Claim 5, **characterized in that**, during the period of time in which the tool spindle (23, 23') having a current tool (25, W3) approaches a workpiece (26) from the tool-change position (38) and processes said workpiece (26) and thereafter returns to the tool-change position (38), a new tool (W4, W5) is provided by the background magazine (31) at the tool-interchange position (39).

8. Method according to Claim 7, **characterized in that** the tool change between the tool spindle (23, 23') and the machine magazine (36) takes place simultaneously with the tool interchange between the machine magazine (36) and the background magazine (31).

9. Method according to anyone of Claims 6 to 8, **characterized in that** the used tool is the tool which has been deposited last.

10. Method according to any of Claims 6 to 8, **characterized in that** the used tool is the tool which has been deposited next to last.

11. Method according to anyone of Claims 6 to 8, **characterized in that** the new tool is the tool which is to be used next.

12. Method according to anyone of Claims 6 to 8, **characterized in that** the new tool is the tool which is to be used next but one.

## Revendications

1. Machine-outil comprenant au moins une broche porte-outil (23, 23') pouvant être déplacée de manière relative dans au moins une des trois directions spatiales (15, 18, 21) par rapport à un dispositif (27) afin de maintenir des pièces (26), dans lesquelles des outils (25 ; W1 - W7) peuvent être serrés aux fins de l'usinage des pièces (26), comprenant un magasin de machine (36), dans lequel des outils (25 ; W1 - W7) prévus pour l'échange dans l'au moins une broche porte-outil (23, 23') sont maintenus en stock, et comprenant un magasin d'arrière-plan (31), dans lequel des outils (25 ; W1 - W7) prévus pour l'échange dans le magasin de machine (36) sont maintenus en stock, dans laquelle quatre emplacements de stockage (42, 43, 44, 45) pour recevoir des outils (25 ; W1 - W7) sont prévus dans le magasin de machine (36) pour la ou chaque broche porte-outil (23, 23'), **caractérisée en ce que** le magasin de machine (36) présente deux paires (42, 43 ; 44, 45) respectivement de deux emplacements de stockage (42, 43 ; 44, 45), disposés l'un par rapport à l'autre à une première distance (48), pour la ou chaque broche porte-outil (23, 23'), dans laquelle deux emplacements de stockage (43, 44 ; 45, 42) adjacents issus de différentes paires présentent l'un par rapport à l'autre une deuxième distance (49) qui est plus grande que la première distance (48).

2. Machine-outil selon la revendication 1, **caractérisée en ce que** le magasin de machine (36) est un magasin de chaîne comprenant une chaîne (41), au niveau de laquelle les emplacements de stockage (42, 43, 44, 45) sont disposés.

3. Machine-outil selon la revendication 1 ou 2, **caractérisée en ce qu'**elle présente un chariot (12) pouvant être déplacé dans une première direction spatiale (15), sur lequel est monté un support (16) pouvant être déplacé dans une deuxième direction spatiale (18), au niveau duquel est montée une tête de broche (22) pouvant être déplacée dans une troisième direction spatiale (21), dans laquelle la ou chaque broche porte-outil (23, 23') est montée de manière à pouvoir tourner, et **en ce que** le magasin de machine (36) est monté au niveau du chariot (12).

4. Machine-outil selon la revendication 3, **caractérisée en ce que** le magasin de machine (36) est monté de telle manière qu'il peut être déplacé entre une position de changement d'outil (38), dans laquelle des outils (25 ; W1 - W7) sont échangés entre le magasin de machine (36) et la broche porte-outil (23), et une position de remplacement d'outil (39), au niveau de laquelle des outils (25 ; W1 - W7) sont échangés entre le magasin d'arrière-plan (31) et le magasin de machine (36).

5. Procédé pour le changement d'outil au niveau d'une machine-outil (10) comprenant au moins une broche porte-outil (23, 23') pouvant être déplacée de manière relative dans au moins une des trois directions spatiales (15, 18, 21) par rapport à un dispositif (27) pour maintenir des pièces (26), dans laquelle des outils (25 ; W1 - W7) peuvent être serrés aux fins de l'usinage des pièces (26), comprenant un magasin de machine (36), dans lequel des outils (25 ; W1 - W7) prévus pour l'échange dans l'au moins une broche porte-outil (23, 23') sont maintenus en stock, et comprenant un magasin d'arrière-plan (31), dans lequel des outils (25 ; W1 - W7) prévus pour l'échange dans le magasin de machine (36) sont maintenus en stock, dans le cadre duquel
l'au moins une broche porte-outil (23, 23') est conduite dans une position de changement d'outil (38), au niveau de laquelle des outils (25 ; W1 - W7) sont échangés entre le magasin de machine (36) et l'au moins une = broche porte-outil (23), et
une position de remplacement d'outil (39) est prévue, au niveau de laquelle des outils (25 ; W1 - W7) sont échangés entre le magasin d'arrière-plan (31) et le magasin de machine (36), dans lequel quatre outils (25 ; W1 - W7) au maximum pour chaque broche porte-outil (23, 23') se trouvent au même moment dans le magasin de machine (36),
**caractérisé en ce que** le magasin de machine (36) présente deux paires (42, 43 ; 44, 45) de respectivement deux emplacements de stockage (42, 43, 44, 45) disposés l'un par rapport à l'autre à une première distance (48) pour la ou chaque broche porte-outil (23, 23'), dans lequel deux emplacements de stockage (43, 44 ; 45, 42) adjacents issus de paires différentes présentent l'un par rapport à l'autre une deuxième distance (49), qui est plus grande que la première distance (48), dans lequel
le magasin de machine (36) est déplacé au-delà de la première distance (48) aux fins du changement d'outil d'un outil ancien et est déplacé au-delà de la deuxième distance (49) aux fins du remplacement d'outil pour la ou chaque broche porte-outil (23, 23').

6. Procédé selon la revendication 5, **caractérisé en ce qu'**au cours du laps de temps, dans lequel la broche porte-outil (23, 23') comprenant un outil actuel (25 W3) rapproche depuis la position d'échange d'outil (38) et usine une pièce (26) puis la ramène après dans la position d'échange d'outil (38), un ancien outil (W1) déposé au préalable depuis la broche porte-outil (23, 23') dans le magasin de machine (36) est retiré au niveau de la position de remplacement d'outil (39) et un nouvel outil (W4, W5) de préférence est déposé dans un emplacement de stockage (42, 43, 44, 45) libre dans le magasin de machine (36).

7. Procédé selon la revendication 5, **caractérisé en ce qu'**au cours du laps de temps, dans lequel la broche porte-outil (23, 23') comprenant un outil actuel (25, W3) rapproche depuis la position d'échange d'outil (38) et usine une pièce (26) puis la ramène après dans la position d'échange d'outil (38), un nouvel outil (W4, W5) est mis à disposition par le magasin d'arrière-plan (31) au niveau de la position de remplacement d'outil (39).

8. Procédé selon la revendication 7, **caractérisé en ce que** l'échange d'outil entre la broche porte-outil (23, 23') et le magasin de machine (36) a lieu de manière simultanée aux fins du remplacement d'outil entre le magasin de machine (36) et le magasin d'arrière-plan (31).

9. Procédé selon l'une quelconque des revendications 6 à 8, **caractérisé en ce que** l'ancien outil est l'outil déposé en dernier.

10. Procédé selon l'une quelconque des revendications 6 à 8, **caractérisé en ce que** l'ancien outil est l'outil déposé en avant-dernier.

11. Procédé selon l'une quelconque des revendications 6 à 8, **caractérisé en ce que** le nouvel outil est l'outil à utiliser prochainement.

12. Procédé selon l'une quelconque des revendications 6 à 8, **caractérisé en ce que** le nouvel outil est l'outil à utiliser en deuxième.
